# FASCICULE DE BREVET EUROPEEN

(11) **EP 3 084 288 B1**
(45) Date de publication et mention de la délivrance du brevet: **21.08.2019**
(21) Numéro de dépôt: 14812544.6
(22) Date de dépôt: 16.12.2014
(51) Int. Cl.: F17C 11/00

(54) **RESERVOIR DE STOCKAGE D'HYDROGENE A HYDRURES METALLIQUES OFFRANT UN CONFINEMENT DES HYDRURES**
METALLHYDRIDWASSERSTOFFSPEICHERTANK FÜR DIE AUFNAHME VON HYDRIDEN
METAL HYDRIDE HYDROGEN STORAGE TANK FOR CONTAINING HYDRIDES

(30) Priorité: 17.12.2013 FR 1362783
(43) Date de publication de la demande: 26.10.2016
(73) Titulaire: Commissariat à l'Énergie Atomique et aux Énergies Alternatives, 75015 Paris (FR); McPhy Energy, 26190 La Motte-Fanjas (FR)
(72) Inventeur: CHAISE, Albin, F-38000 Grenoble (FR); BOUFFETIER, David, F-38000 Grenoble (FR); DUPUIS, Cédric, F-38160 Saint Romans (FR); DUPUIS-ROSCA, Mariana, F-38160 Saint Romans (FR); ELIE, Manon, F-38100 Grenoble (FR); GILLIA, Olivier, F-38360 Sassenage (FR); VEMPAIRE, David, F-38640 Claix (FR)
(74) Mandataire: Brevalex
(86) Numéro de dépôt international: PCT/EP2014/078071
(87) Numéro de publication internationale: WO 2015/091556

(56) Documents cités:
- EP-A2- 2 469 150
- WO-A1-02/061249
- US-A1- 2011 138 748

## Description

### DOMAINE TECHNIQUE ET ART ANTÉRIEUR

La présente invention se rapporte à un réservoir de stockage d'hydrogène à hydrures métalliques offrant un confinement efficace des hydrures.

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme comprimée entre 350 et 700 bars, ce qui pose des problèmes de sécurité. Il faut alors prévoir des réservoirs aptes à tenir ces pressions, sachant par ailleurs que ces réservoirs, lorsqu'ils sont montés dans des véhicules, peuvent être soumis à des chocs.

Il peut être stocké sous forme liquide, cependant ce stockage n'assure qu'un faible rendement de stockage et ne permet pas le stockage sur de longues durées. Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène dit « solide » sous la forme d'hydrure. Ce stockage autorise une densité volumique de stockage importante et met en oeuvre une pression modérée d'hydrogène tout en minimisant l'impact énergétique du stockage sur le rendement global de la chaine hydrogène, i.e. de sa production à sa conversion en une autre énergie.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante : 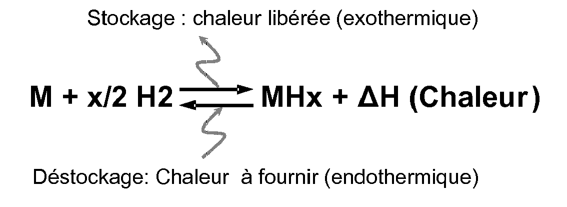
- M étant la poudre ou matrice métallique,
- MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

De façon quasi-systématique, l'hydrure et le métal, qui se présentent tous deux sous forme de poudre dans les réservoirs, ont une différence de densité comprise entre 10 % et 30 %.

Cette variation de densité au sein du réservoir a deux conséquences :
- d'une part, l'apparition de contraintes à l'intérieur des grains de poudre lors des cycles d'absorption-désorption, ce qui provoque leur fractionnement en plus petits grains. Ce phénomène est appelé décrépitation,
- d'autre part, le gonflement des grains de poudre au cours de l'absorption d'hydrogène et le dégonflement des grains lors de la désorption. Un volume libre au-dessus de la poudre est alors prévu pour tenir compte de ce gonflement.

Le phénomène de décrépitation et le phénomène de gonflement sont responsables d'une densification progressive du lit de poudre à mesure que le nombre de cycles d'absorption-désorption croît. En effet, la décrépitation fait apparaître des poudres de plus en plus fines qui migrent par gravité vers le fond du réservoir à travers le réseau de grains. De plus, lorsque la vitesse du flux d'hydrogène est suffisamment importante, les grains sont déplacés et réarrangés dans le réservoir. Par ailleurs, le lit de poudre tend à se rétracter, i.e. à voir son volume diminuer lors d'une désorption ce qui laisse un espace vide entre les parois du réservoir et le lit du matériau de stockage de l'hydrogène. Une migration des poudres intervient par gravité via cet espace et le comble. Lors de l'absorption suivante, la poudre d'hydrure formée ne va pas se comporter comme un fluide. En particulier, le niveau du lit de poudre dans le réservoir n'est pas celui atteint lors de l'absorption précédente. En effet les frottements des grains entre eux et contre la paroi du réservoir empêchent le lit de poudre de se dilater librement. Le gonflement des grains de poudre est alors compensé par la réduction de la taille des porosités.

Le lit de matériau de stockage de l'hydrogène/d'hydrure se densifie ainsi progressivement au cours des cycles d'hydruration.

On appelle « cycle d'hydruration », une phase d'absorption suivie d'une phase de désorption d'hydrogène.

Il est donc important d'éviter une accumulation de matériau de stockage de l'hydrogène dans un espace confiné profond qui pourrait appliquer des contraintes pouvant détériorer la structure du réservoir.

Afin de réduire les problèmes liés à l'accumulation et au gonflement du matériau de stockage, il a été proposé de compartimenter la quantité de matériau de stockage mise en oeuvre. Pour cela, il a été proposé des réservoirs dans lesquels le matériau de stockage est distribué dans différents étages. Le réservoir comporte une virole traversée longitudinalement par un tube poreux pour la distribution et la collecte d'hydrogène et des coupelles montées autour du tube poreux et délimitant les étages. Si les coupelles ne délimitent pas des logements étanches, le matériau en poudre lors de la décrépitation peut passer entre la virole et la coupelle et/ou entre la coupelle et le tube poreux. Le matériau s'accumule dans les étages inférieurs et dans le fond du réservoir.

Par exemple, le document US20040178083 décrit un exemple de réservoir d'hydrogène comportant une pluralité de compartiments superposés comportant chacun un fond et une paroi latérale. Les compartiments sont empilés le long de l'axe du réservoir et des tubes en matériau poreux s'étendent le long de l'axe du réservoir et traversent les compartiments pour distribuer l'hydrogène au sein de l'hydrure contenu dans les compartiments en phase de charge, et collecter l'hydrogène libéré par cet hydrure en phase de décharge. Les compartiments sont en matériau conducteur thermique et en contact avec le récipient du réservoir. Ainsi des échanges thermiques ont lieu à travers la paroi du récipient pour contrôler le chargement et déchargement de l'hydrogène.

La structure de ce réservoir ne permet pas d'assurer un confinement étanche de l'hydrure dans les compartiments. En effet, la présence des ouvertures dans le fond des compartiments pour permettre le passage des tubes de distribution et collecte d'hydrogène et la présence d'un jeu nécessaire entre les tubes et ces ouvertures provoquent des fuites de la poudre qui va s'accumuler dans le fond du réservoir. En outre, un tel réservoir impose une grande précision dans la réalisation du récipient et des compartiments afin d'assurer le contact entre la face intérieure du récipient et la face extérieure des parois latérales des compartiments, contact nécessaire aux échanges thermiques.

Le document US 4489564 décrit un réservoir d'hydrogène sous forme d'hydrure comportant une enceinte dans lequel est disposé un manchon réalisé en métal tissé souple, l'hydrure est stocké dans le manchon qui se déforme radialement, en fonction de la dilatation de l'hydrure. Ce manchon présente des mailles qui laissent passer l'hydrure sous forme de poudre. Un risque d'accumulation existe. Le document WO02/061249A1 décrit un autre réservoir d'hydrogène.

### EXPOSÉ DE L'INVENTION

C'est par conséquent un but de la présente invention d'offrir un dispositif de stockage d'hydrogène offrant un confinement efficace du matériau de stockage d'hydrogène et de réalisation simplifiée.

Le but précédemment énoncé est atteint par un réservoir de matériau de stockage comportant une enceinte, et une structure interne délimitant une pluralité de logements étanches à la poudre et perméables à l'hydrogène, un jeu étant ménagé entre au moins une partie de la surface latérale de la structure interne et la surface intérieure de la virole, ce jeu étant utilisé pour alimenter le matériau de stockage en hydrogène à stocker et/ou pour collecter l'hydrogène libéré.

Grâce à l'invention, on peut supprimer la présence d'un ou plusieurs tubes traversant les compartiments pour apporter l'hydrogène au sein des compartiments et sa collecte, des zones de fuite de poudre sont ainsi supprimées. En outre, la structure interne de stockage du matériau de stockage n'étant pas en contact avec la virole, la réalisation du réservoir est simplifiée, la précision de fabrication de la virole et de la structure interne étant sensiblement diminuée.

En d'autres termes, le réservoir d'hydrogène selon l'invention comporte des godets fermés de sorte à être étanches au matériau de stockage sous forme de poudre, et perméable à l'hydrogène, ce qui évite toute fuite de poudre et donc son accumulation dans des zones susceptibles de fragiliser mécaniquement le réservoir.

La perméabilité à l'hydrogène est par exemple obtenue par la réalisation d'une ou plusieurs ouvertures dans la structure interne obturées par un matériau perméable à l'hydrogène, par exemple une grille, un tissu, dont la taille des mailles empêche le passage de la poudre. Les logements pourraient alternativement être réalisés entièrement en un matériau poreux à l'hydrogène, par exemple en matériau fritté.

Dans une réalisation avantageuse, les logements sont réalisés en matériau plastique.

Dans un mode de réalisation, les logements sont formés par des godets individuels comportant un fond, une paroi latérale et un couvercle délimitant un espace intérieur étanche à la poudre. Les godets sont étanches à la poudre individuellement et sont empilés dans la virole. Dans un mode de réalisation, les logements sont formés par des godets, le fond d'un godet supérieur formant le couvercle d'un godet inférieur. Le fond du godet supérieur coopère avec le bord libre du godet inférieur, par exemple par vissage, emboîtement..., de sorte à délimiter un espace étanche à la poudre dans le godet inférieur.

Le réservoir selon l'invention est particulièrement adapté au stockage de l'hydrogène lent, par exemple le stockage saisonnier d'hydrogène ou sur des périodes longues, qui ne requiert pas des vitesses de stockage et de déstockage grandes et de fait ne requiert pas des échanges thermiques importants.

La présente invention a alors pour objet un réservoir de stockage de l'hydrogène par absorption dans un matériau de stockage de l'hydrogène, comportant une enceinte, des moyens aptes à alimenter en hydrogène l'intérieur de l'enceinte et à collecter l'hydrogène dans l'enceinte, une structure interne pour stocker du matériau de stockage de l'hydrogène, ladite structure interne comportant au moins deux godets, chaque godet comportant un fond, une paroi latérale et un élément de fermeture formant un volume étanche au matériau de stockage pulvérulent, au moins une partie de chaque godet étant perméable à l'hydrogène, et la structure interne étant telle qu'un passage est ménagé au moins entre une partie d'une face extérieure de la paroi latérale des godets et une face intérieure de l'enceinte.

Les moyens aptes à alimenter en hydrogène l'intérieur de l'enceinte (2) et à collecter l'hydrogène dans l'enceinte sont connectés au passage ménagé au moins entre une partie de la face extérieure de la paroi latérale des godets et la face intérieure de l'enceinte.

Avantageusement, ladite au moins une partie perméable à l'hydrogène est réalisée au moins dans la paroi latérale des godets. La paroi latérale peut alors comporter au moins une ouverture obturée par un élément étanche au matériau de stockage pulvérulent et perméable à l'hydrogène. L'élément étanche au matériau de stockage pulvérulent et perméable à l'hydrogène est par exemple une grille ou un matériau poreux ou un tissu.

Alternativement, au moins une des parois latérales est réalisée entièrement en un matériau étanche au matériau de stockage et perméable à l'hydrogène, par exemple au moins la paroi latérale est en matériau fritté.

De préférence, les godets sont autoportants.

Dans un mode de réalisation, l'élément de fermeture de chaque godet est un couvercle, distinct des autres godets.

Dans un autre mode de réalisation, la structure interne comporte plusieurs godets empilés, l'élément de fermeture d'un godet inférieur étant formé par le fond d'un godet supérieur. Par exemple, les godets coopèrent par emboitement. De préférence, des moyens de verrouillage entre les godets sont prévus de sorte à solidariser de manière durable les godets entre eux.

Les moyens de verrouillage sont par exemple de type baïonnette. Par exemple, la paroi latérale du godet inférieur comporte au moins un pion ou au moins une encoche et le fond du godet supérieur comporte au moins une encoche ou au moins un pion respectivement, le au moins un pion coopérant avec la au moins une encoche par un déplacement de rapprochement axial et un déplacement en rotation afin de verrouiller le godet inférieur et le godet supérieur.

Selon un autre exemple, les moyens de verrouillage sont des moyens de vissage ou encore des moyens d'encliquetage.

Le réservoir peut comporter des moyens d'étanchéité interposés entre la paroi latérale et l'élément de fermeture du godet, ces moyens d'étanchéité étant étanche au matériau de stockage pulvérulent.

Dans un exemple avantageux, les godets sont réalisés en matériau plastique, par exemple en polypropylène moulé. Avantageusement, dans ce cas l'élément étanche au matériau de stockage de l'hydrogène et perméable à l'hydrogène est solidarisé à la surface latérale des godets lors du moulage de ceux-ci.

Le réservoir peut comporter une chemise entourant au moins en partie l'enceinte et des moyens de circulation d'un fluide caloporteur dans la chemise.

La présente invention a également pour objet un procédé de fabrication d'un réservoir de stockage de matériau de stockage selon l'invention, comportant,
a) la réalisation de l'enceinte,
b) la réalisation des godets,
c) le remplissage des godets avec le matériau de stockage,
d) la fermeture étanche des godets,
e) la mise en place dans l'enceinte,
f) la fermeture de l'enceinte.

L'étape d) peut être réalisée au moyen de couvercles distincts des autres godets ou par empilement des godets, le godet inférieur étant fermé par le godet supérieur.

L'étape d) peut comporter une étape de verrouillage des godets entre eux.

L'étape b) peut être une réalisation par moulage de matériau plastique. Lors du moulage, de préférence l'élément perméable à l'hydrogène est solidarisé au reste du godet.

Alternativement lors de l'étape b), les godets sont réalisés par frittage de sorte à être étanches au matériau de stockage pulvérulent et perméable à l'hydrogène.

### BRÈVE DESCRIPTION DES DESSINS

La présente invention sera mieux comprise à l'aide de la description qui va suivre et des dessins en annexes sur lesquels:
- la figure 1 est une vue en coupe longitudinale d'un exemple de réservoir selon l'invention représentée schématiquement,
- la figure 2 une vue en coupe longitudinale d'un autre exemple de réservoir selon l'invention représentée schématiquement,
- la figure 3 est une vue en coupe longitudinale schématique d'un premier mode de réalisation d'un empilement de godets étanches coopérant les uns avec les autres mis en oeuvre par la présente invention,
- la figure 4A est une vue de détail d'un exemple de coopération entre les godets selon le mode de la figure 3,
- la figure 4B est une vue de détail d'exemple de coopération entre les godets selon le mode de la figure 3,
- la figure 5 est une vue de détail d'un autre exemple de réalisation de coopération entre godets,
- les figures 6A et 6B sont des vues de détail de la figure 5,
- les figures 7A et 7B sont des vues de détail de deux variantes d'un autre exemple de coopération entre godets,
- les figures 8A et 8B sont des vues en coupe longitudinale de deux variantes d'un autre exemple du premier mode de réalisation d'un empilement de godets étanches coopérant les uns avec les autres mis en oeuvre par la présente invention,
- la figure 9 est une vue en coupe longitudinale d'un deuxième mode de réalisation d'un godet étanche indépendant mis en oeuvre par la présente invention,
- la figure 10 est une vue de côté d'un exemple de godet muni d'une ouverture perméable à l'hydrogène,
- la figure 11 est une vue de côté d'un autre exemple de godet muni d'une ouverture perméable à l'hydrogène.

### EXPOSÉ DÉTAILLÉ DE MODES DE RÉALISATION PARTICULIERS

Dans la suite de la description, les hydrures métalliques seront désignés par "matériau de stockage".

On appelle « cycle d'hydruration », une phase d'absorption suivie d'une phase de désorption d'hydrogène.

Dans la description qui va suivre, le ou les réservoirs décrits présentent une forme cylindrique de révolution, qui représente le mode préféré de réalisation. Néanmoins tout réservoir formé par un élément creux présentant une dimension longitudinale plus grande que sa dimension transversale, et ayant une section quelconque, par exemple polygonale ou ellipsoïdale ne sort pas du cadre de la présente invention.

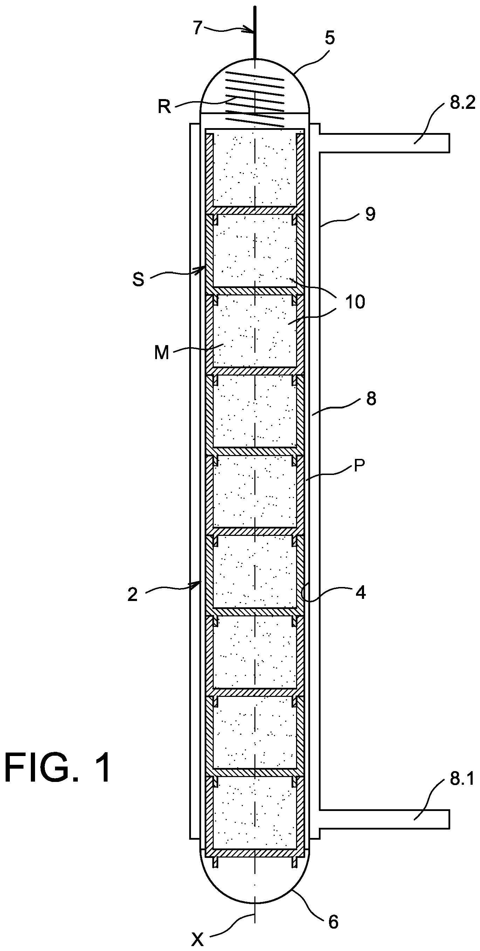

Sur la figure 1, on peut voir un exemple de réalisation d'un réservoir d'hydrogène selon l'invention comportant une enceinte 2 dans laquelle est stocké le matériau de stockage. L'enceinte est formée d'une virole 4 d'axe longitudinal X fermée à une extrémité inférieure par un fond inférieur 6 et fermée à une extrémité supérieure par un fond supérieur 5. La virole 4 est, dans l'exemple représenté, de section circulaire.

Le réservoir est destiné à être généralement orienté de sorte que l'axe longitudinal X est sensiblement aligné avec la direction du vecteur gravité. Cependant lors de son utilisation, notamment dans le cas d'une utilisation embarquée, son orientation peut changer.

L'enceinte est destinée à tenir une certaine pression d'hydrogène, typiquement comprise entre 0,1 bar et 1000 bars. Le réservoir comprend des moyens 7 d'alimentation en hydrogène et de collecte de l'hydrogène. Dans l'exemple représenté, il s'agit d'un piquage formé à travers le fond supérieur 5 de l'enceinte. Les moyens d'alimentation et de collecte peuvent être distincts.

Le réservoir comporte également une chemise 8 entourant en grande partie l'enceinte, la chemise délimite autour de l'enceinte un volume étanche dans lequel est destiné à circuler un fluide caloporteur 9 afin d'apporter de la chaleur au matériau de stockage ou d'extraire de chaleur de ce matériau de stockage. Dans l'exemple représenté, la chemise 8 comporte une connexion d'alimentation 8.1 en fluide caloporteur située de préférence dans la partie inférieure de la chemise et une connexion d'évacuation en fluide caloporteur située de préférence dans la partie supérieure 8.2 de la chemise 8 de sorte à utiliser le phénomène de convection naturelle dans les échanges thermiques. Ainsi le fluide circule de bas en haut autour de l'enceinte et échange de la chaleur avec l'enceinte par convection forcée et par convection naturelle. Par exemple, le fluide caloporteur est l'air, l'eau, une huile ou encore un gaz.

Le réservoir comporte également une structure interne S de stockage du matériau de stockage M disposée dans l'enceinte 2. La structure interne S est reçue avec jeu dans l'enceinte de sorte qu'un passage P existe entre la surface extérieure de la structure S et la surface intérieure de l'enceinte 2, passage servant à l'alimentation et à la collecte de l'hydrogène comme cela sera décrit par la suite.

Par exemple le matériau de stockage est un hydrure choisi parmi la famille des alanates, AB₅, AB₂, AB, BCC ou éléments simples (ex : LaNi₅, TiFe, TiVCr, Mg...).

Les dimensions des particules dépendent du matériau de stockage utilisé. Les particules présentent des dimensions variant de préférence entre 0,1 µm et 1 mm voire une dizaine de millimètres, de préférence entre 1 µm et 100 µm. Il est à noter qu'un mélange de poudre comporte des particules de tailles différentes. Un pourcentage massique très majoritaire du mélange de poudre est composé de particules d'une taille minimale donnée et des particules de taille inférieure forment le pourcentage massique resta nt.

La structure interne S comporte une pluralité de godets 10 empilés les uns sur les autres. Le matériau de stockage est confiné de manière étanche dans chacun des godets. Les godets sont rigides et forment chacun un élément autoportant apte à supporter un ou plusieurs godets contenant du matériau de stockage de sorte à permettre la réalisation d'un empilement. La chemise, tout au moins le fluide caloporteur, entoure une grande partie de la zone de l'enceinte contenant le matériau de stockage, par exemple 90% de la zone de l'enceinte contenant le matériau de stockage.

Dans la présente demande, on entend par un élément étanche au matériau de stockage un élément qui laisse passer moins de 10% en masse du matériau de stockage, ces 10% étant composés des particules de tailles les plus petites composant le matériau de stockage. Les différentes réalisations de cette étanchéité sont décrites dans la suite de la description.

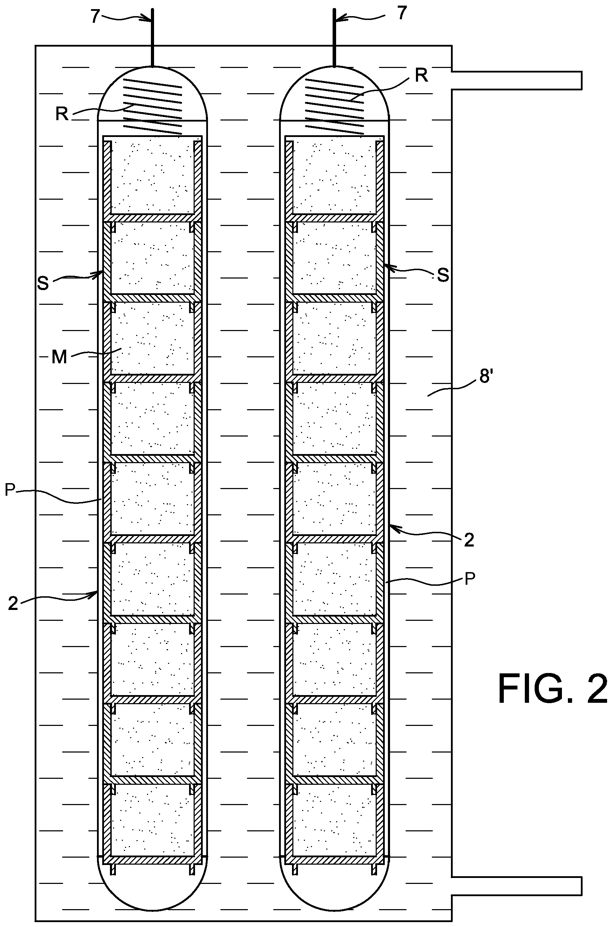

Sur la figure 2, on peut voir un autre exemple de réalisation d'un réservoir comportant deux enceintes 2 disposées dans une seule chemise 8'. Il sera compris que le réservoir peut comporter plus de deux enceintes dans une même chemise ou alors plusieurs chemises contenant chacune une ou plusieurs enceintes.

Alternativement, le réservoir pourrait comporter uniquement une ou plusieurs enceintes échangeant des calories par convection naturelle directement avec l'air ambiant.

La mise en oeuvre ou non d'une chemise dépend de la vitesse à laquelle on souhaite absorber ou désorber l'hydrogène.

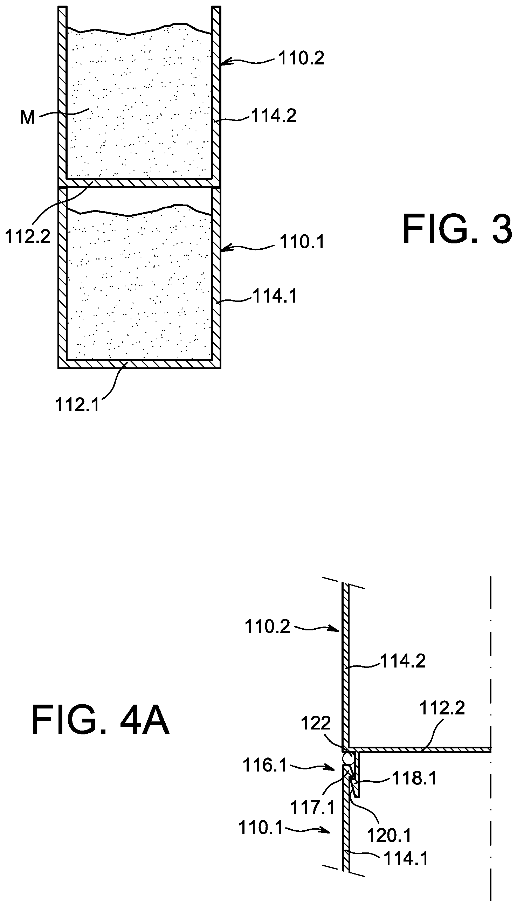

Sur la figure 3, on peut voir un premier mode de réalisation d'une structure interne selon l'invention représenté schématiquement comportant une pluralité de godets formant un empilement. Dans ce mode de réalisation, les godets 110.1, 110.2 sont empilés et le godet supérieur 110.2 obture de manière étanche le godet inférieur 110.1. Chaque godet 110.1, 110.2 comporte un fond 112.1, 112.2, et une paroi latérale 114.1, 114.2 respectivement. Le fond du godet supérieur 112.2 est tel qu'il assure une fermeture étanche à la poudre du godet inférieur 110.1. Le fond du godet supérieur 110.2 et l'extrémité libre 116.1 du godet inférieur coopèrent pour réaliser cette étanchéité.

Sur la figure 4A, on peut voir un exemple pratique d'un premier mode de réalisation d'un godet inférieur coopérant avec un godet supérieur. Dans cet exemple, les godets sont verrouiller les uns aux autres par des moyens d'encliquetage. De manière très avantageuse, un moyen d'étanchéité 122, par exemple un joint torique, est interposé entre le fond 112.2 du godet supérieur 110.2 et l'extrémité libre 116.1 du godet inférieur 110.1 afin d'assurer une bonne étanchéité. Le joint peut être indépendant et mis en place lors de l'assemblage des deux godets ou être solidaire de l'un ou l'autre des godets. La fermeture du godet inférieur par le godet supérieur peut être suffisante sans recourir à un joint d'étanchéité.

Les moyens d'encliquetage, dans l'exemple représenté, sont les suivants : l'extrémité libre 116.1 du godet inférieur 110.1 comporte un ou plusieurs éléments 117.1 en saillie radialement vers l'intérieur de sa surface interne. Le fond du godet supérieur 112.2 présente sur sa face destinée à être située à l'intérieur du volume du godet inférieur 110.1 un ou des éléments 118.2 munis d'une saillie radiale 120.2 vers l'extérieur. La ou les saillies radiales 120.2 et l'élément 117.1 en saillie coopèrent par encliquetage. L'élément 118.2 peut être un anneau et l'élément 117.1 peut également être une saillie annulaire. Mais il est envisageable de réaliser des éléments 117.1 discrets coopérant avec l'anneau 118.2 ou inversement de réaliser une saillie 117.1radiale vers l'intérieur de forme annulaire et des éléments 118.2 discrets ou encore des réalisés des éléments 117.1 discrets coopérant par encliquetage avec des éléments 118.2 discrets. Il sera compris que les éléments 117.1 et 118.2 pourraient être intervertis entre le godet inférieur 110.1 et le godet supérieur 110.2.

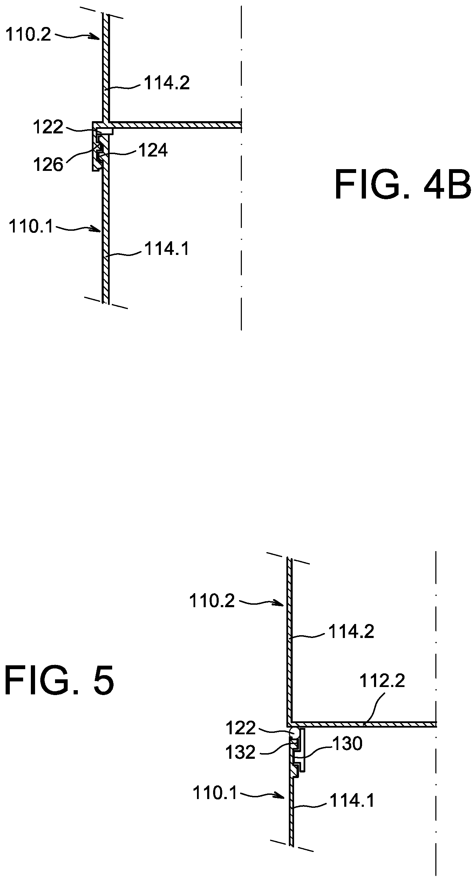

Sur la figure 4B, on peut voir un autre exemple de réalisation d'un godet inférieur et d'un godet supérieur coopérant par vissage.

Un filetage 124 est réalisé sur la face extérieure de la paroi latérale du godet inférieur 110.1 et le godet supérieur 110.2 comporte un élément annulaire 126 s'étendant longitudinalement à partir d'une face du fond 112.2 opposée à celle portant la paroi latérale 114.2. L'élément annulaire 126 est muni sur sa face intérieure d'un taraudage coopérant avec le filetage 124 du godet inférieur. Un joint 122 est avantageusement disposé entre le fond du godet supérieur et l'extrémité libre du godet inférieur, par exemple un joint plat.

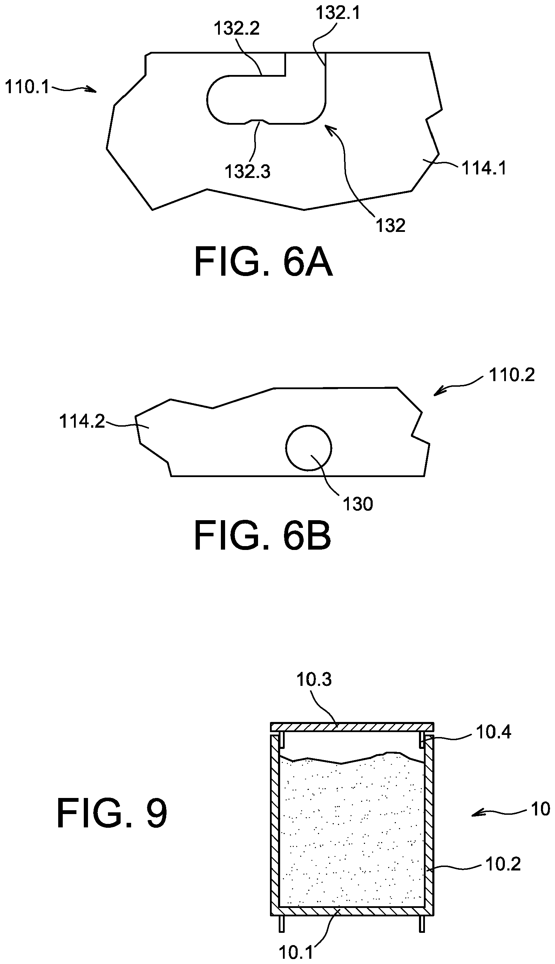

Sur les figures 5 et 6A et 6B, on peut voir un autre exemple particulièrement avantageux de fermeture étanche du godet inférieur par coopération entre le godet inférieur et le godet supérieur. Dans cet exemple, des moyens de type à baïonnette sont mis en oeuvre.

Le godet supérieur 110.2 comporte un pion 130, avantageusement plusieurs pions 130, s'étendant radialement, chaque pion 130 coopérant avec une glissière ou une encoche 132 formée sur le godet inférieur 110.1. Par exemple, la ou les encoches 132 comportent une première portion 132.1 s'étendant parallèle à l'axe longitudinal et débouchant dans le bord libre de la paroi latérale 114.1 et une deuxième portion 132.2 s'étendant dans un plan perpendiculaire à l'axe longitudinal. Les pions 130 pénètrent tout d'abord dans la première portion 132.1 des encoches 132 par rapprochement axial des deux godets. Un déplacement relatif autour de l'axe longitudinal des deux godets assure le verrouillage des deux godets. Sur la figure 6A, on peut voir le pion en détail et sur la figure 6B, on peut voir l'encoche 132.

Avantageusement, la deuxième portion 132.2 de l'encoche comporte un bossage intermédiaire 132.3 formant un point dur à franchir par les pions lors de la rotation relative des godets, améliorant le verrouillage entre les godets

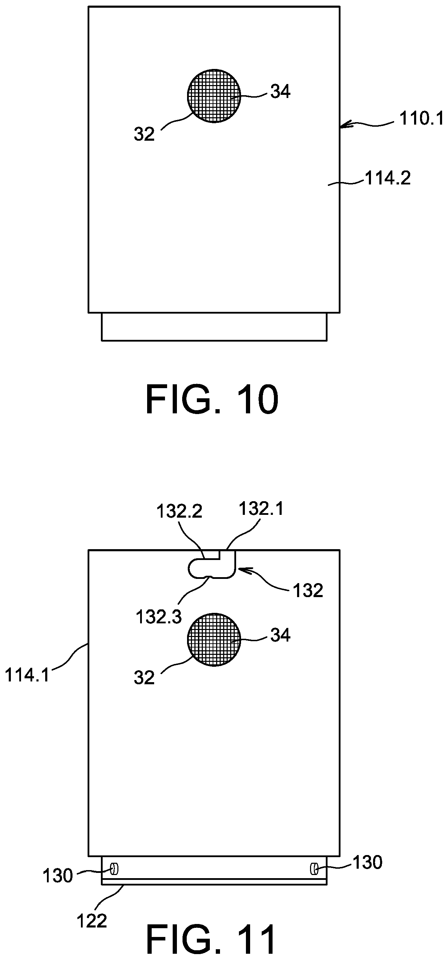

Avantageusement un moyen d'étanchéité 122 est prévu entre le godet inférieur 110.1 et le godet supérieur 110.2, par exemple entre le fond du godet supérieur 110.2 et l'extrémité libre du godet inférieur 110.1. Sur la figure 11, on peut voir un godet muni d'encoches 132 au niveau de l'extrémité libre de la paroi latérale et des pions 130 au niveau du fond. Un joint 122 est monté sur le fond.

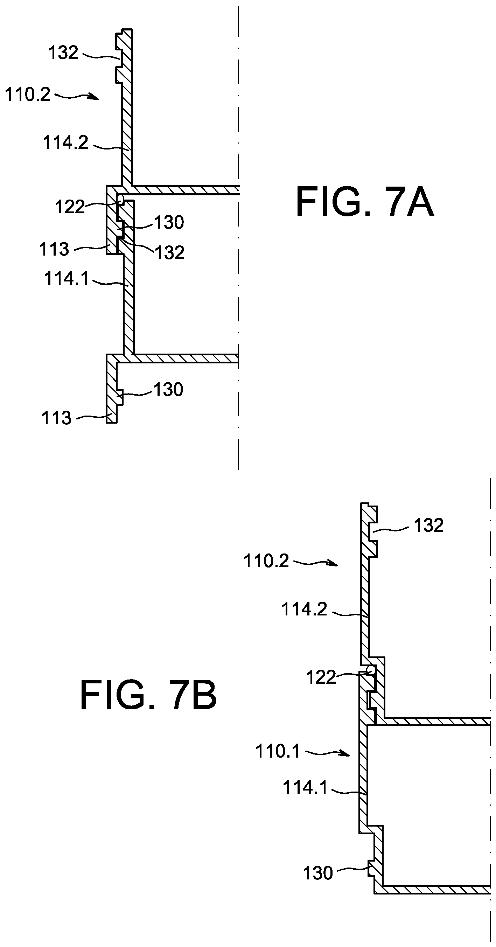

Sur les figures 7A et 7B, on peut voir des variantes des moyens de verrouillage à baïonnette.

Sur la figure 7A, le godet supérieur 110.2 comporte un élément annulaire 113 s'étendant longitudinalement d'une face du fond opposée à celle portant la paroi latérale 114.2. Des pions 130 sont portés par la surface intérieure de l'élément annulaire 113. Les encoches 132 sont formées dans la surface extérieure du godet inférieur. Dans cet exemple, c'est le godet inférieur qui pénètre à l'intérieur de l'élément annulaire 113 du godet supérieur 110.2. Sur la figure 7B, c'est le godet supérieur qui pénètre dans le godet inférieur. Dans ce cas les pions 130 sont formés directement en saillie de la paroi latérale du godet supérieur 110.2, et les encoches 132 sont formées dans ou sur la surface intérieure de la paroi latérale du godet inférieur 110.1.

La variante de la figure 7B présente l'avantage d'être plus performante sur le plan thermique que la variante de la figure 7A car la distance entre l'hydrure et la paroi est minimisée.

Dans la réalisation de la figure 7B, la portion du godet inférieur comportant les pions présente un diamètre réduit par rapport au reste du godet. Alternativement, on pourrait envisager que le godet supérieur présente un diamètre constant et que le godet inférieur comporte une portion portant les encoches avec un diamètre augmenté par rapport à la portion située du côté du fond.

Il sera compris que tout autre moyen assurant une fermeture étanche et un verrouillage entre deux godets entre dans le cadre de la présente invention. Ces moyens de fermeture présentent l'avantage de pouvoir ouvrir le godet si l'on souhaite remplacer le matériau de stockage. Des moyens définitifs de fermeture et de verrouillage entre godets ne sortent pas du cadre de la présente invention.

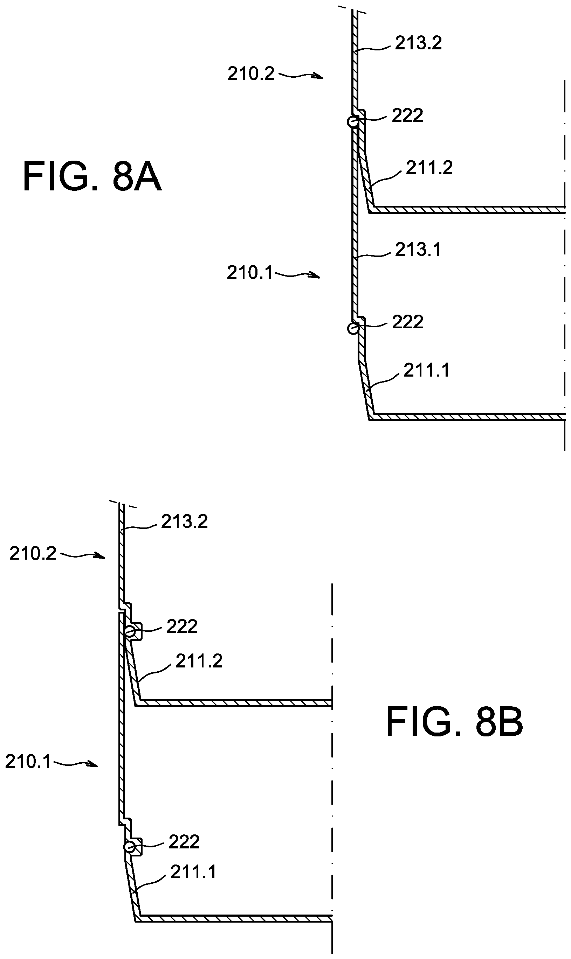

Dans un autre exemple de réalisation représenté sur les figures 8A et 8B, le godet inférieur est fermé de manière étanche par un simple emboîtement du godet supérieur dans le godet inférieur.

Avantageusement, des moyens d'alignement des godets les uns par rapport aux autres peuvent être prévus, par exemple ils peuvent être formés par un système de virole ou de pion de centrage situé sous le godet permettant un alignement sensible des axes des godets.

Dans cet exemple, le fond et la paroi latérale des godets peuvent être réalisés par formage. La paroi latérale 214.1 du godet 210.1 présente une portion inférieure 211.1 de diamètre réduit et une portion supérieure 213.1 de plus grand diamètre. La portion inférieure 211.1 a un diamètre extérieur égal ou légèrement supérieur au diamètre intérieur de la portion supérieure 213.1 de la paroi latérale. Le godet supérieur 210.2 peut être monté serré ou légèrement en force dans le godet inférieur 210.1. Le fond du godet peut présenter une partie conique, comme cela est représenté, pour faciliter l'emboitement. Le couvercle fermant le godet au sommet de l'empilement présente un diamètre égal au diamètre intérieur de la portion supérieure du godet ou légèrement supérieur à celui-ci.

L'emboitement ainsi réalisé assure une fermeture étanche mais n'assure pas en général un verrouillage des godets les uns par rapport aux autres. Un joint 222 peut être prévu, dans l'exemple représenté il est disposé sur la portion inférieure 211.1 du godet à la jonction entre la portion inférieure 211.1 et la portion supérieure 213.1. Sur la figure 8B, le joint 222 est reçu dans une gorge annulaire réalisée directement dans la portion inférieure 211.1, 211.2. De préférence, l'empilement de godets emboités disposé dans l'enceinte est maintenu en place grâce à un ou plusieurs ressorts R travaillant en compression dans l'axe de l'empilement et placés préférentiellement au-dessus de l'empilement de godet, comme cela est représenté sur les figures 1 et 2. Dans ce cas particulier, le ressort prend appui d'un côté dans le fond bombé supérieur de l'enceinte et de l'autre sur le couvercle du godet supérieur. Le ressort maintient le contact entre les godets consécutifs et entre le godet supérieur et son couvercle pour assurer l'étanchéité des godets à la poudre.

Sur la figure 9, on peut voir un exemple de réalisation d'un godet d'un réservoir selon l'invention. Le godet 10 comporte un fond 10.1, une paroi latérale 10.2 et un couvercle 10.3. Le fond 10.1 et la paroi latérale 10.2 forment un récipient muni d'une ouverture supérieure qu'obture le couvercle 10.3 de manière étanche au matériau de stockage en poudre. Avantageusement des moyens de centrage 10.4 sont prévus pour l'assemblage du couvercle 10.3 sur la paroi latérale 10.2. Des moyens d'étanchéité peuvent avantageusement être mis en oeuvre entre le couvercle et la paroi latérale.

Dans cet exemple, le godet 10 réalise l'étanchéité à la poudre indépendamment des autres godets. Une fois rempli et fermé, le godet 10 peut être manipulé.

Les exemples de moyens de fermeture étanche décrits ci-dessus dans le cas de la coopération des godets sur les figures 3 à 7B, sont applicables à la fermeture étanche d'un godet individuel, ces moyens étant réalisés entre le couvercle et la paroi latérale du godet.

Les joints qui sont avantageusement mis en oeuvre pour augmenter l'étanchéité sont en élastomère, en polymère, en carbone ou métalliques. L'utilisation d'un joint peut être évitée si la coopération entre le godet inférieur et le godet supérieur ou entre la paroi latérale du godet et le couvercle offre une étanchéité suffisante. Le ou joints mis en oeuvre peuvent être étanches ou non à l'hydrogène.

Les godets selon l'invention sont en outre partiellement ou totalement perméables à l'hydrogène. Comme cela a été expliqué ci-dessus, l'alimentation en hydrogène et la collecte d'hydrogène sont réalisés au moyen du canal P délimité entre les parois latérales des godets et l'enceinte et à travers une partie au moins des parois latérales. Dans un exemple de réalisation représenté sur les figures 10 et 11, le godet 110.2 comporte au moins une ouverture 32 réalisée dans la paroi latérale 114.2 du godet et obturée par un élément 34 assurant l'étanchéité au matériau de stockage pulvérulent. Comme cela a été précisé ci-dessus, l'élément d'étanchéité 34 à la poudre est tel qu'il forme une barrière pour plus de 90% en masse du matériau de stockage disposé dans le godet.

L'élément d'étanchéité à la poudre 34 est par exemple formé par une grille dont la taille des mailles est inférieure à 100 µm. Alternativement il peut être formé par un matériau poreux, tel qu'un matériau fritté, par exemple en polymère fritté ou métal fritté, ou par un tissu présentant une taille de maille inférieur à 100 µm. L'élément d'étanchéité à la poudre 34 recouvre toute l'ouverture 32.

Le choix de l'élément d'étanchéité est effectué en fonction de la répartition des particules composant le matériau de stockage suivant leur taille de sorte qu'il soit apte à empêcher le passage de plus de 90% en masse du matériau stocké dans le godet. Ainsi la taille des mailles est telle que la masse des particules pouvant passer à travers les mailles de l'élément d'étanchéité représente moins de 10% de la masse totale du matériau stocké dans le godet. Cette répartition est une donnée connue de l'homme du métier en fonction du matériau de stockage. A titre d'exemple uniquement, dans le cas d'une poudre centrée sur 200 µm en distribution massique (i.e. 50% de la masse de la poudre est composée de particules de taille inférieure à 200 µm), en choisissant un filtre dont la taille de maille est de 76 µm, on permet effectivement le passage de moins de 10% en masse des particules de poudre.

De préférence, lorsque que l'élément d'étanchéité à la poudre 34 est rapporté sur le godet après la réalisation de celui-ci, il est fixé sur la face intérieure de la paroi latérale.

De préférence, le godet comporte plusieurs ouvertures 32 réparties sur sa périphérie pour augmenter la surface de passage de l'hydrogène et assurer une alimentation et une collecte homogènes de l'hydrogène sur toute la périphérie du godet. La forme des ouvertures peut être quelconque.

De préférence également, la ou les ouvertures 32 sont réalisées dans la partie supérieure de la paroi latérale, ainsi l'élément d'étanchéité 34 à la poudre est protégé des particules les plus fines qui s'accumulent naturellement au fond du godet, le colmatage de l'élément d'étanchéité est donc évité.

Dans l'exemple de réalisation d'ouvertures dans la surface latérale des godets pour le passage de l'hydrogène, la section de passage peut ne pas être suffisante pour éviter l'apparition d'une importante différence de pression entre l'intérieur et l'extérieur des godets dans le cas des variations brutales de pression et des débits importants. Il peut alors être prévu de limiter volontairement le débit d'hydrogène dans l'enceinte, par exemple au moyen d'un orifice calibré placé à l'entrée de l'enceinte de pression.

Alternativement, afin de pallier ce risque d'apparition de différence de pression, la section de passage peut être augmentée par exemple en augmentant le nombre d'ouvertures 32.

Dans une variante particulièrement avantageuse, les godets sont réalisés en matériau plastique capable de tenir les températures de fonctionnement, de l'ordre de 80°C, par exemple en polypropylène, polyuréthane, polyéthylène téréphtalate, polyamide.... Le matériau plastique est avantageusement moulé. Il est alors de préférence prévu préalablement à l'injection du matériau plastique dans le moule de disposer dans le moule le ou les éléments d'étanchéité à la poudre dans le ou les emplacements prévus pour les ouvertures de manière à surmouler le ou les éléments d'étanchéité. Ainsi les éléments d'étanchéité sont directement intégrés au godet. Le matériau plastique est choisi de sorte à ce qu'aux températures de fonctionnement du réservoir, il ne libère pas de composé susceptible de polluer le matériau de stockage.

Le godet peut être réalisé directement en un matériau perméable à l'hydrogène, tel qu'un matériau fritté poreux, plastique ou métallique par exemple. La réalisation d'un godet en matériau poreux présente l'avantage d'offrir une section de passage de l'hydrogène suffisamment grande pour assurer un équilibrage efficace de la pression d'hydrogène entre l'intérieur et l'extérieur des godets.

Des godets en matériau perméable à l'hydrogène et comportant une ou des ouvertures 32 fermées par un élément 34 ne sortent pas du cadre de la présente invention.

Les matériaux plastiques sont de moins bons conducteurs thermiques que le métal. La mise en oeuvre de godet en plastique dans des applications de charge et de décharge lente ne perturbe pas le fonctionnement du réservoir, puisque l'on ne cherche pas à avoir des échanges thermiques rapides.

La structure interne S, plus particulièrement les godets, sont montés avec jeu dans l'enceinte, est ainsi ménagé un passage P pour la circulation de l'hydrogène entre au moins une partie de la périphérie des godets et la surface intérieure de l'enceinte. Ce jeu représente de 0,1% à 20% du diamètre interne de l'enveloppe de l'enceinte 4, de préférence 1% du diamètre interne de l'enveloppe de l'enceinte 4. De manière avantageuse, si la vitesse est suffisante un écoulement turbulent peut apparaître ce qui va permettre d'augmenter les transferts thermiques avec l'enceinte.

Le piquage prévu dans le fond supérieur permet d'alimenter ce passage en hydrogène qui va circuler jusqu'au matériau de stockage à travers les ouvertures réalisées dans le godet ou d'extraire l'hydrogène libéré par le matériau de stockage et s'échappant par les ouvertures vers le canal. Le fonctionnement du réservoir est le suivant:
Lors d'une phase de charge, de l'hydrogène est injecté dans l'enceinte par le piquage, celui-ci circule dans le passage P entre la face intérieure de l'enceinte et les godets et pénètre dans les godets à travers les ouvertures 32 dotées d'éléments filtrants 34 prévues à cet effet et/ou à travers le matériau perméable des godets. Le matériau de stockage se charge en hydrogène suivant la réaction décrite ci-dessus et libère de la chaleur, cette chaleur est évacuée grâce aux échanges avec la face extérieure de l'enceinte soit avec un gaz, soit avec un liquide circulant dans une chemise. Si le fluide est l'air et que l'échange s'effectue par convection naturelle, la chemise n'est pas nécessaire. Lors de cette charge, le matériau de stockage gonfle et subit une décrépitation, c'est-à-dire un fractionnement des grains constituant la poudre. Ce phénomène est plus important lorsqu'il s'agit des premières charges. Le matériau de stockage se transforme donc progressivement en une poudre de plus en plus fine au cours des cycles de charge-décharge successifs. La poudre reste majoritairement confinée dans chaque godet étanche et aucune accumulation de poudre d'hydrure pouvant perturber le fonctionnement du réservoir n'apparaît à l'extérieur de ceux-ci.

En phase de décharge, le matériau de stockage est chauffé pour provoquer la désorption de l'hydrogène et son relargage. L'hydrogène désorbé s'échappe des godets par les ouvertures 32 dotés d'éléments filtrants 34 ou à travers les godets perméables. Il est ensuite collecté dans le passage P et évacué par le piquage 7. L'apport de chaleur au matériau de stockage se fait par exemple en faisant circuler dans la chemise entourant l'enceinte un caloporteur chaud. Les échanges thermiques s'effectuent à travers l'enceinte, à travers le jeu entre l'enceinte et les godets ainsi qu'à travers la paroi des godets.

La réalisation d'un réservoir va maintenant être décrite.

L'enceinte peut être préalablement réalisée en soudant un fond inférieur sur une virole. Dans le cas d'une structure interne formée de godets indépendants (figure 9), on réalise les récipients formés du fond et de la paroi latérale, au moins la paroi latérale comportant au moins une zone perméable à l'hydrogène.

Grâce à l'invention, la réalisation de l'enceinte et des godets ne requiert pas une grande précision car le montage se fait avec jeu.

Plusieurs godets sont remplis de matériau de stockage et fermés par un couvercle comme cela a été décrit ci-dessus. La quantité de matériau disposée dans le godet est fonction des caractéristiques du matériau de stockage. Le matériau de stockage peut être sous forme de poudre, de bloc ou de granulés ayant par exemple un diamètre supérieur à 0,5 mm ou sous forme de pastilles réalisées avec de la poudre comprimée avec ou sans additifs.

Les godets sont ensuite disposés dans l'enceinte les uns sur les autres, jusqu'à remplir l'enceinte. Le diamètre intérieur de la virole permet un montage avec jeu des godets dans la virole. Il n'est pas requis de maintenir les godets les uns par rapport aux autres, leur positionnement relatif dans l'enceinte peut être libre. Un passage existe entre les godets et l'enceinte quelle que soit leur positionnement. Un ressort peut éventuellement être mis en place en compression au sommet de l'empilement pour assurer un maintien de l'empilement.

Après la mise en place du godet supérieur, le fond supérieur de l'enceinte est fixé de manière étanche sur la virole, par exemple par soudage.

Dans le cas de godets coopérant les uns avec les autres, la structure interne formée d'une colonne de godets est réalisée à l'extérieur de l'enceinte. Pour cela, un godet tel que décrit en relation avec les figures 7A et 7B est rempli avec une masse de matériau définie, un joint peut être mis en place sur l'extrémité libre du godet, le godet est ensuite fermé par mise en place du godet supérieur. Le godet supérieur est ensuite rempli et fermé par un autre godet. Ces étapes de remplissage et de fermeture sont répétées jusqu'à atteindre la hauteur requise. Le dernier godet est fermé par un couvercle, ce dernier est par exemple formé uniquement d'un fond de godet découpé, évitant ainsi la réalisation de pièce spécifique. La colonne ainsi réalisée forme un ensemble monolithique qui peut être manipulé, la poudre étant confinée de manière étanche dans les godets. Une fois la colonne de godets formée, l'ensemble est placé dans l'enceinte de pression. Avantageusement, la colonne est mise à l'horizontal pour être glissée dans l'enceinte de pression horizontale elle aussi. Le fond bombé supérieur est ensuite fixé de manière étanche sur la virole par exemple par soudage.

L'invention présente en outre l'avantage d'éviter une pollution de la zone de soudure de la virole par le matériau de stockage, puisque ce matériau est confiné dans les godets, il ne peut se déposer sur la zone de soudure.

Dans le cas d'une coopération par emboîtement, le procédé est proche de celui décrit ci-dessus, hormis l'étape de verrouillage des godets successifs entre eux.

Ensuite, après la mise en place du godet supérieur, le couvercle est emboité dans le godet supérieur puis le ou les ressorts sont placés au-dessus de l'empilement. Le fond bombé supérieur est fermé de manière étanche sur la virole par exemple par soudage, tout en maintenant un effort de compression pour refermer l'enceinte de pression en comprimant les ressorts.

Avantageusement, dans tous les modes de réalisation, l'opération de montage des godets dans l'enceinte de pression est effectuée à l'air, notamment dans le cas où l'hydrure, par exemple du TiFeMn non décrépité, est d'une nature ou sous une forme qui n'est pas affectée par l'air du point de vue des performances de stockage.

Le stockage saisonnier d'hydrogène ou sur des périodes longues est adapté à ce type de réservoir qui ne possède pas une capacité d'échange thermique très importantes.

## Revendications

1. Réservoir de stockage de l'hydrogène par absorption dans un matériau de stockage (M) de l'hydrogène, comportant :
- une enceinte (2),
- des moyens (7) aptes à alimenter en hydrogène l'intérieur de l'enceinte (2) et à collecter l'hydrogène dans l'enceinte (2),
- une structure interne (S) pour stocker du matériau de stockage de l'hydrogène, ladite structure interne comportant au moins deux godets (10, 110.1, 110.2, 201.1, 210.2), chaque godet comportant un fond (10.1, 112.1, 112.2), une paroi latérale (10.2, 114.1, 114.2) et un élément de fermeture (10.3) formant un volume étanche au matériau de stockage pulvérulent, au moins une partie de chaque godet (10, 110.1, 110.2, 201.1, 210.2) étant perméable à l'hydrogène, et la structure interne étant telle qu'un passage (P) est ménagé au moins entre une partie d'une face extérieure de la paroi latérale (10.2, 114.1, 114.2) des godets et une face intérieure de l'enceinte (2), lesdits moyens (7) aptes à alimenter en hydrogène l'intérieur de l'enceinte (2) et à collecter l'hydrogène dans l'enceinte (2) étant connectés audit passage,
dans lequel le réservoir ne comporte aucun tube d'alimentation en hydrogène et de collecte de hydrogène traversant les godets (10.1,110.1,110.2,201.1,210.2)..

2. Réservoir selon la revendication 1, dans lequel ladite au moins une partie perméable à l'hydrogène est réalisée au moins dans la paroi latérale (10.2, 114.1, 114.2) des godets, par exemple la paroi latérale comporte au moins une ouverture (32) obturée par un élément étanche (34) au matériau de stockage pulvérulent et perméable à l'hydrogène, l'élément étanche (34) au matériau de stockage pulvérulent et perméable à l'hydrogène étant par exemple une grille ou un matériau poreux ou un tissu.

3. Réservoir selon la revendication 1 ou 2, dans lequel au moins la paroi latérale (10.2, 114.1, 114.2) est réalisée entièrement en un matériau étanche au matériau de stockage et perméable à l'hydrogène, au moins la paroi latérale (10.2, 114.1, 114.2) étant avantageusement en matériau fritté.

4. Réservoir selon l'une des revendications 1 à 63, dans lequel les godets (10, 110.1, 110.2, 201.1, 210.2) sont autoportants.

5. Réservoir selon l'une des revendications 1 à 4, dans lequel l'élément de fermeture (10.1) de chaque godet est un couvercle, distinct des autres godets.

6. Réservoir selon l'une des revendications 1 à 5, dans lequel la structure interne (S) comporte plusieurs godets (110.1, 110.2, 201.1, 210.2) empilés, l'élément de fermeture d'un godet inférieur étant formé par le fond d'un godet supérieur.

7. Réservoir selon la revendication 6, dans lequel les godets (110.1, 110.2, 201.1, 210.2) coopèrent par emboitement.

8. Réservoir selon la revendication 6 ou 7, comportant des moyens de verrouillage entre les godets (110.1, 110.2) de sorte à solidariser de manière durable les godets (110.1, 110.2) entre eux, les moyens de verrouillage étant par exemple des moyens de vissage ou des moyens d'encliquetage.

9. Réservoir selon la revendication 8, dans lequel les moyens de verrouillage sont de type baïonnette, avantageusement la paroi latérale du godet inférieur (110.1) comportant au moins un pion (130) ou au moins une encoche (132) et le fond du godet supérieur (110.2) comporte au moins une encoche (132) ou au moins un pion (130) respectivement, le au moins un pion (130) coopérant avec la au moins une encoche (132) par un déplacement de rapprochement axial et un déplacement en rotation afin de verrouiller le godet inférieur (110.1) et le godet supérieur (110.2).

10. Réservoir selon l'une des revendications 1 à 9, comportant des moyens d'étanchéité (122, 222) au matériau de stockage pulvérulent, les moyens d'étanchéité (122, 222) étant interposés entre la paroi latérale et l'élément de fermeture du godet.

11. Réservoir selon l'une des revendications 1 à 10, dans lequel les godets sont réalisés en matériau plastiqueur, avantageusement en polypropylène moulé.

12. Réservoir selon l'une des revendications 1 à 11, comportant une chemise (8) entourant au moins en partie l'enceinte (2), et des moyens de circulation (8.1, 8.2) d'un fluide caloporteur dans la chemise (8).

13. Procédé de fabrication d'un réservoir de stockage de matériau de stockage selon l'une des revendications 1 à 12, comportant,
a) la réalisation de l'enceinte,
b) la réalisation des godets,
c) le remplissage des godets avec le matériau de stockage,
d) la fermeture étanche des godets,
e) la mise en place des godets dans l'enceinte de sorte à ménager un passage entre au moins une partie d'une face extérieure des godets et l'enceinte,
f) la fermeture de l'enceinte.

14. Procédé de fabrication selon la revendication 13, dans lequel l'étape d) est réalisée au moyen de couvercles distincts des autres godets ou l'étape d) est réalisée par empilement des godets, le godet inférieur étant fermé par le godet supérieur.

15. Procédé de fabrication selon la revendication 14, dans lequel l'étape d) comporte une étape de verrouillage des godets entre eux.

16. Procédé de fabrication selon l'une des revendications 13 à 15, dans lequel l'étape b) a lieu par moulage de matériau plastique, lors du moulage, l'élément perméable à l'hydrogène étant avantageusement solidarisé au reste du godet, ou les godets sont réalisés par frittage de sorte à être étanches au matériau de stockage pulvérulent et perméable à l'hydrogène.

## Patentansprüche

1. Speicherbehälter für Wasserstoff durch Absorption in einem Speichermaterial (M) für Wasserstoff, umfassend:
- ein Gehäuse (2),
- Mittel (7), welche dazu geeignet sind, dem Inneren des Gehäuses (2) Wasserstoff zuzuführen und Wasserstoff im Gehäuse (2) zu sammeln,
- eine innere Struktur (S) zum Speichern von Wasserstoffspeichermaterial, wobei die innere Struktur wenigstens zwei Behälter (10, 110.1, 110.2, 201.1, 210.2) umfasst, wobei jeder Behälter einen Boden (10.1, 112.1, 112.2), eine Seitenwand (10.2, 114.1, 114.2) und ein Verschlusselement (10.3) umfasst, welches ein gegen das pulverförmige Speichermaterial abgedichtetes Volumen bildet, wobei wenigstens ein Teil jedes Behälters (10, 110.1, 110.2, 201.1, 210.2) für den Wasserstoff durchlässig ist, und wobei die innere Struktur derart ist, dass ein Durchlass (P) ausgespart ist, wenigstens zwischen einem Teil der Außenseite der Seitenwand (10.2, 114.1, 114.2) der Behälter und einer Innenseite des Gehäuses (2), wobei die Mittel (7), welche dazu ausgebildet sind, dem Inneren des Gehäuses (2) Wasserstoff zuzuführen und Wasserstoff im Gehäuse (2) zu sammeln, mit dem Durchlass verbunden sind,
wobei der Speicher kein die Behälter (10.1, 110.1, 110.2, 201.1, 210.2) durchquerendes Rohr für die Zufuhr und Sammlung von Wasserstoff umfasst.

2. Speicher nach Anspruch 1, wobei der wenigstens eine für Wasserstoff durchlässige Teil wenigstens in der Seitenwand (10.2, 114.1, 114.2) der Behälter ausgebildet ist, wobei beispielsweise die Seitenwand wenigstens eine durch ein gegen das pulverförmige Speichermaterial abgedichtete und für Wasserstoff durchlässige Element (34) verschlossene Öffnung (32) umfasst, wobei das gegen das pulverförmige Speichermaterial abgedichtetes und für Wasserstoff durchlässiges Element (34) beispielsweise ein Gitter oder ein poröses Material oder ein Gewebe ist.

3. Speicher nach Anspruch 1 oder 2, wobei wenigstens die Seitenwand (10.2, 114.1, 114.2) vollständig aus einem gegen das pulverförmige Speichermaterial abgedichteten und für Wasserstoff durchlässigen Material gefertigt ist, wobei wenigstens die Seitenwand (10.2, 114.1, 114.2) vorteilhafterweise aus einem Sintermaterial besteht.

4. Speicher nach einem der Ansprüche 1 bis 3, wobei die Behälter (10, 110.1, 110.2, 201.1, 210.2) freitragend sind.

5. Speicher nach einem der Ansprüche 1 bis 4, wobei das Verschlusselement (10.1) jedes Behälters ein Deckelt ist, der sich von den anderen Behältern unterscheidet.

6. Speicher nach einem der Ansprüche 1 bis 5, wobei die innere Struktur (S) mehrere gestapelte Behälter (110.1, 110.2, 201.1, 210.2) umfasst, wobei das Verschlusselement eines unteren Behälters durch den Boden eines oberen Behälters gebildet ist.

7. Speicher nach Anspruch 6, wobei die Behälter (110.1, 110.2, 201.1, 210.2) durch Ineinandergreifen zusammenwirken.

8. Speicher nach Anspruch 6 oder 7, welcher Arretierungsmittel zwischen den Behältern (110.1, 110.2) umfasst, derart, dass die Behälter (110.1, 110.2) dauerhaft miteinander verbunden sind, wobei die Arretierungsmittel beispielsweise Schraubmittel oder Einrastmittel sind.

9. Speicher nach Anspruch 8, wobei die Arretierungsmittel vom Bajonetttyp sind, wobei vorteilhafterweise die Seitenwand des unteren Behälters (110.1) wenigstens einen Überstand (130) oder wenigstens eine Aussparung (132) umfasst und wobei der Boden des oberen Behälters (110.2) jeweils wenigstens eine Aussparung (132) oder wenigstens einen Überstand (130) umfasst, wobei der wenigstens eine Überstand (130) mit der wenigstens einen Aussparung (132) durch eine axiale Annäherungsbewegung und eine Rotationsbewegung zusammenwirkt, um den unteren Behälter (110.1) und den oberen Behälter (110.2) miteinander zu arretieren.

10. Speicher nach einem der Ansprüche 1 bis 9, welcher Abdichtungsmittel (122, 222) gegen das pulverförmige Speichermittel umfasst, wobei die Abdichtungsmittel (122, 222) zwischen der Seitenwand und dem Verschlusselement des Behälters angeordnet sind.

11. Speicher nach einem der Ansprüche 1 bis 10, wobei die Behälter aus Kunststoffmaterial gefertigt sind, vorteilhafterweise aus gemahlenem Polypropylen.

12. Speicher nach einem der Ansprüche 1 bis 11, welcher eine Ummantelung (8) umfasst, die das Gehäuse (2) wenigstens teilweise umgibt, und Fließmittel (8.1, 8.2) für eine Kühlflüssigkeit in der Ummantelung (8).

13. Verfahren zur Herstellung eines Speicherbehälters für Speichermaterial nach einem der Ansprüche 1 bis 12, umfassend,
a. die Herstellung des Gehäuses,
b. die Herstellung der Behälter,
c. das Füllen der Behälter mit dem Speichermaterial,
d. das dichte Verschließen der Behälter,
e. die Platzierung der Behälter in dem Gehäuse derart, dass ein Durchlass zwischen wenigstens einem Teil der Außenseite der Behälter und dem Gehäuse frei bleibt,
f. das Verschließen des Gehäuses.

14. Herstellungsverfahren nach Anspruch 13, wobei Schritt d) mittels Deckeln durchgeführt wird, die sich von den anderen Behältern unterscheiden, wobei Schritt d) durch Stapeln der Behälter durchgeführt wird, wobei der untere Behälter durch den oberen Behälter verschlossen wird.

15. Herstellungsverfahren nach Anspruch 14, wobei Schritt d) einen Schritt der Arretierung der Behälter miteinander umfasst.

16. Herstellungsverfahren nach einem der Ansprüche 13 bis 15, wobei Schritt b) durch Mahlen von Kunststoffmaterial ausgeführt wird,
wobei beim Mahlen das gegenüber Wasserstoff durchlässige Element vorteilhafterweise fest mit dem restlichen Behälter verbunden wird, oder wobei die Behälter durch Sintern gefertigt werden, so dass sie gegen das pulverförmige und für Wasserstoff durchlässige Speichermaterial abgedichtet sind.

## Claims

1. Tank for storing hydrogen by absorption in a hydrogen storage material (M), comprising:
- a enclosure (2),
- means (7) capable of supplying hydrogen into the enclosure (2) and collecting hydrogen in the enclosure (2),
- an inner structure (S) for storing hydrogen storage material, said inner structure comprising at least two cups (10, 110.1, 110.2, 201.1, 210.2), each cup comprising a base (10.1, 112.1, 112.2), a side wall (10.2, 114.1, 114.2) and a closing element (10.3) forming a volume impermeable to the powdered storage material, at least part of each cup (10, 110.1, 110.2, 201.1, 210.2) being permeable to hydrogen, and the inner structure being such that a passage (P) is provided at least between part of an outer face of the side wall (10.2, 114.1, 114.2) of the cups and an inner face of the enclosure (2), said means (7) capable of supplying hydrogen into the enclosure (2) and collecting hydrogen in the enclosure (2) being connected to said passage, in which the tank does not comprise any hydrogen supplying and collecting pipe passing through the cups (10.1, 110.1,110.2, 201.2, 210.2).

2. Tank according to claim 1, in which said at least one part permeable to hydrogen is formed at least in the side wall (10.2, 114.1, 114.2) of the cups, for example the side wall comprises at least one opening (32) sealed off by an element (34) impermeable to the powdered storage material and permeable to hydrogen, the element (34) impermeable to the powdered storage material and permeable to hydrogen being for example a grating or a porous material or a fabric.

3. Tank according to claim 1 or 2, in which at least one of the side walls (10.2, 114.1, 114.2) is made entirely of a material impermeable to the storage material and permeable to hydrogen, at least the side wall (10.2, 114.1, 114.2) being advantageously made of sintered material.

4. Tank according to one of claims 1 to 3, in which the cups (10, 110.1, 110.2, 201.1, 210.2) are self-supporting.

5. Tank according to one of claims 1 to 4, in which the closing element (10.1) of each cup is a cover, separate from the other cups.

6. Tank according to one of claims 1 to 5, in which the inner structure (S) comprises several stacked cups (110.1, 110.2, 201.1, 210.2), the closing element of a lower cup being formed by the base of an upper cup.

7. Tank according to claim 6, in which the cups (110.1, 110.2, 201.1, 210.2) cooperate by nesting.

8. Tank according to claim 6 or 7, comprising locking means between the cups (110.1, 110.2) so as to make the cups integral with each other in a durable manner (110.1, 110.2), for example the locking means being screwing means or are clipping means.

9. Tank according to claim 8, in which the locking means are of bayonet type, advantageously the side wall of the lower cup (110.1) comprising at least one slug (130) or at least one notch (132) and the base of the upper cup (110.2) comprises at least one notch (132) or at least one slug (130) respectively, the at least one slug (130) cooperating with the at least one notch (132) by an axial coming closer movement and a rotational movement in order to lock the lower cup (110.1) and the upper cup (110.2).

10. Tank according to one of claims 1 to 9, comprising means of sealing (122, 222) against the powdered storage material, said sealing means (122, 222) being interposed between the side wall and the closing element of the cup.

11. Tank according to one of claims 1 to 10, in which the cups are made of plastic material, advantageously made of moulded polypropylene.

12. Tank according to one of claims 1 to 11, comprising a jacket (8) surrounding at least in part the enclosure (2), and means of circulating (8.1, 8.2) a heat transfer fluid in the jacket (8).

13. Method of manufacture of a storage material storage tank according to one of claims 1 to 12, comprising,
a) the formation of the enclosure,
b) the formation of the cups,
c) the filling of the cups with the storage material,
d) the sealed closing of the cups,
e) the putting in place of the cups in the enclosure, such that a passage (P) is provided between at least part of an outer face of the side wall of the cups and the enclosure
f) the closing of the enclosure.

14. Method of manufacture according to claim 13, in which step d) is carried out by means of covers separate from the other cups or step d) is carried out by stacking of the cups, the lower cup being closed by the upper cup.

15. Method of manufacture according to claim 14, in which step d) comprises a step of locking the cups together.

16. Method of manufacture according to one of claims 13 to 15, in which step b) takes place by moulding of plastic material, during moulding, the element permeable to hydrogen being advantageously secured to the remainder of the cup, or the cups are formed by sintering so as to be impermeable to the powdered storage material and permeable to hydrogen.
